# FASCICULE DE BREVET EUROPEEN

(11) **EP 0 499 584 B1**
(45) Date de publication et mention de la délivrance du brevet: **31.07.1996**
(21) Numéro de dépôt: 92810083.3
(22) Date de dépôt: 06.02.1992
(51) Int. Cl.: G02B 6/16

(54) **Procédé de réalisation d'un réseau de diffraction sur une fibre optique**
Verfahren zur Herstellung eines Beugungsgitters auf einer optischen Faser
Method of manufacturing a diffraction grating or an optical fiber

(30) Priorité: 15.02.1991 CH 466/91
(43) Date de publication de la demande: 19.08.1992
(73) Titulaire: CENTRE SUISSE D'ELECTRONIQUE ET DE MICROTECHNIQUE S.A., 2007 Neuchâtel (CH)
(72) Inventeur: Kotrotsios, Georges, CH-2000 Neuchâtel (CH); Berthou, Hervé, CH-2024 Saint-Aubin (CH); Neuman, Victor, CH-2035 Corcelles (CH); Hintermann, Hans Erich, CH-3232 Anet (CH)
(74) Mandataire: Brulliard, Joel

(56) Documents cités:
- GB-A- 2 189 900
- US-A- 4 795 226
- OPTICS LETTERS. vol. 15, no. 2, 15 Janvier 1990, NEW YORK US pages 102 - 104; D.P. HAND ET AL.: 'Photoinduced refractive-index changes in germanosilicate fibers'
- OPTICS LETTERS. vol. 15, no. 9, 1 Mai 1990, NEW YORK US pages 463 - 465; M. ZÜRN et al.: "Array of grating-fiber couplers"
- SOVIET PHYSICS TECHNICAL PHYSICS. vol. 33, no. 12, Décembre 1988, NEW YORK US pages 1466 - 1467; S.B. KOROVIN ET AL.: 'Narrow-band interference holographic filter based on a one-mode'

## Description

La présente invention se rapporte à un procédé de réalisation d'un réseau de diffraction sur une fibre optique.

Le document "Holographically generated gratings in optical fibers," Optics & Photonics News, July 1990, pp. 14-16, de W.W. Morey et al., décrit un procédé de réalisation d'un réseau dans le coeur d'une fibre optique par effet photoréfractif. La fibre optique ainsi obtenue est utilisée dans un capteur de température ou de pression. L'effet de transduction est basé sur une variation du pas du réseau en fonction de la variation de la grandeur physique à mesurer. En d'autres termes, une variation de l'intensité de l'onde se propageant dans la fibre a lieu pour une longueur d'onde donnée dépendant de la variation de la grandeur physique.

Un inconvénient du procédé de l'art antérieur pour la mise en oeuvre de l'effet photoréfractif est qu'il nécessite l'emploi d'une source de lumière émettant une onde lumineuse ultraviolette. Ces sources peu courantes sont d'un coût élevé. Des sources de lumière plus courantes et émettant à une longueur d'onde de l'ordre de 400 à 550 nm peuvent cependant être utilisées. Toutefois, l'utilisation de telles sources de lumière nécessite une puissance lumineuse importante. De plus, du fait qu'à cette bande de longueur d'onde l'obtention de l'effet photoréfractif permanent fait appel au processus connu d'absorption à deux photons, la durée d'exposition est élevée.

Un autre inconvénient du procédé connu est que le fibrage est de plus en plus difficile à réaliser avec l'adjonction du matériau photosensible, à savoir l'oxyde de germanium, dans le coeur de la fibre.

Un inconvénient du dispositif de transduction ainsi obtenu est qu'il ne peut pas être utilisé dans un capteur optique pour la mesure d'une grandeur chimique, du fait que le milieu chimique devant être analysé doit être en contact direct avec le milieu dans lequel est formé le réseau, c.a.d. le coeur de la fibre.

Aussi un but de l'invention est la réalisation d'un réseau de diffraction sur une fibre optique permettant d'éviter l'utilisation d'une source de lumière ultraviolette ou d'une source de lumière de puissance très élevée émettant dans le domaine du visible.

Le brevet américain USP 4'795'226 divulgue un procédé de réalisation d'un réseau de diffraction sur une fibre optique. Ce procédé comporte la réalisation d'un méplat sur une partie de la fibre. Pour ce faire, il est prévu de réaliser un support, puis de monter la fibre sur ce support de telle sorte qu'elle émerge en partie du support et, enfin, de polir la partie émergeante. Le procédé décrit ne peut pas être facilement exploité de manière industrielle.

Un premier objet de l'invention est un procédé de réalisation d'au moins un réseau de diffraction sur une fibre optique selon la revendication 1.

Selon un autre objet de l'invention, le procédé de réalisation d'au moins un réseau de diffraction sur une fibre optique présente les caractéristiques de la revendication 2.

Un avantage du procédé conforme à l'invention est de permettre simultanément le maintien du méplat lors du fibrage et l'obtention d'une fibre optique présentant une bonne résistance mécanique. La différence de viscosité entre la couche déposée sur le méplat de la préforme et le reste de la section transverse permet le fibrage à une température suffisamment élevée pour bien fondre l'extérieur de la fibre et réduire la tension de fibrage à une valeur typique correspondant au fibrage des fibres de télécommunication, tout en maintenant la section droite du méplat.

En effet, à partir d'une préforme de symétrie non circulaire dont la partie extérieure est uniforme, l'utilisation d'une source de chaleur de symétrie circulaire donne, lors de l'étirage, une fibre qui tend à devenir circulaire. Une solution connue à ce problème consiste à tirer la fibre à une température plus basse que les températures généralement utilisées. Un inconvénient de cette solution est la fragilité de la fibre ainsi obtenue.

Un autre avantage du procédé conforme à l'invention est de permettre l'utilisation d'un four d'étirage de fibre conventionnel ne nécessitant donc aucune modification préalable.

Un autre avantage, du fait que le dépôt de la couche est réalisé directement sur la préforme, est de diminuer le coût de fabrication du dispositif transducteur incorporant une telle fibre optique.

Selon une autre caractéristique de l'invention, la couche en matériau optique, par exemple en silice SiO₂, est dopée au moins par un élément choisi dans le groupe constitué par l'oxyde de titane TiO₂, l'oxyde de germanium GeO₂, l'oxyde de zirconium ZrO₂, l'oxyde de hafnium HfO₂, l'oxyde de phosphore P₂O₅ et les terres rares.

L'oxyde de titane TiO₂, l'oxyde de zirconium ZrO₂ et l'oxyde d'hafnium HfO₂, sont des composés dont le point de fusion est avantageusement supérieur à celui de la silice, ce qui permet de réaliser le fibrage aux températures typiquement utilisées dans les procédés de fibrage de fibres de télécommunication.

Les autres dopants, à savoir l'oxyde de germanium GeO₂, les terres rares, l'oxyde de phosphore P₂O₅, incorporés dans la couche optique en combinaison avec l'un des dopants cités précédemment, ont l'avantage de permettre l'augmentation de la durée de vie des réseaux de diffraction obtenus par effet photorésistif.

Le dispositif transducteur obtenu par le procédé selon l'invention se caractérise en ce qu'il comprend une fibre optique dont la section transverse présente au moins un segment de droite de manière à former un méplat sur toute la longueur de la fibre optique et une couche d'un matériau optique, disposée sur ledit méplat, dont l'indice de réfraction varie périodiquement le long de ladite fibre optique pour former au moins un réseau de diffraction.

Un avantage de cette caractéristique, du fait que la couche optique est déposée pendant la fabrication de la préforme, est de supprimer l'étape complexe consistant en un dépôt ultérieur sur la fibre.

Le dispositif transducteur obtenu par le procédé selon l'invention peut être utilisé dans un capteur physique ou chimique et dans un dispositif de télécommunication.

Un avantage du dispositif transducteur est sa compacité et sa fiabilité ainsi que sa simplicité de fabrication.

Un autre avantage est la possibilité de multiplexer plusieurs réseaux sur le même support sans toutefois interrompre sa continuité.

D'autres buts, caractéristiques et avantages de la présente invention apparaîtront plus clairement à la lecture de la description suivante du procédé de réalisation selon l'invention d'au moins un réseau de diffraction sur une fibre optique, du dispositif transducteur obtenu et de l'utilisation de ce dispositif transducteur, ladite description étant faite à titre purement illustratif et en relation avec les dessins joints dans lesquels:

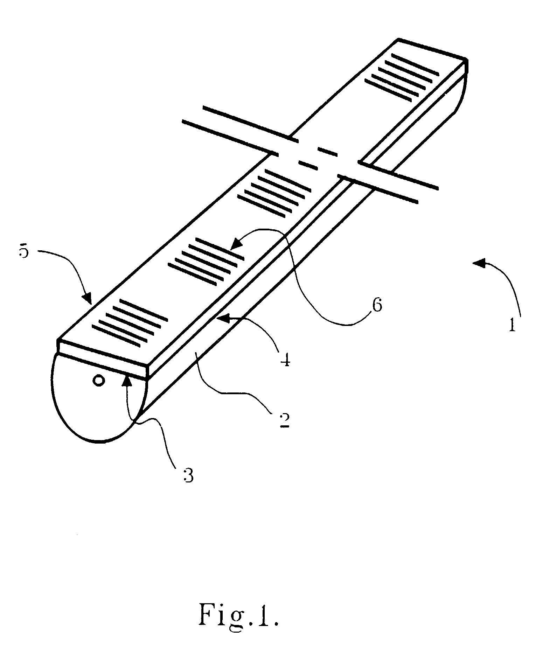

La fig. 1 montre un exemple de dispositif transducteur réalisé selon le procédé conforme à l'invention.

Le procédé de réalisation d'un réseau de diffraction sur une fibre optique conforme à l'invention comporte les étapes suivantes:
- réalisation d'une préforme dont la section transverse présente au moins un segment de droite à partir d'une préforme initiale dont la partie extérieure est usinée ou polie selon un plan parallèle à l'axe de la préforme, de manière à former un méplat sur toute la longueur de la préforme;
- dépôt sur le méplat de la préforme d'une couche optique dopée;
- étirage de la préforme pour obtenir une fibre optique dont la sectin transverse présente au moins un segment de droite de manière à former un méplat sur toute la longueur de la fibre et
- réalisation dans ladite couche d'au moins un réseau de diffraction par effet photoréfractif.

En variante, le procédé de réalisation d'un réseau de diffraction sur une fibre optique conforme à l'invention comporte les étapes suivantes :
- réalisation d'une préforme dont la section transverse présente au moins un segment de droite à partir d'une préforme initiale dont la partie extérieure est usinée ou polie selon un plan parallèle à l'axe de la préforme, de manière à former un méplat sur toute la longueur de la préforme;
- dépôt sur toute la surface de la préforme d'une couche optique dopée;
- attaque chimique de la couche optique déposée sur la partie circulaire de la préforme;
- étirage de de la préforme pour obtenir une fibre optique dont la section transverse présente au moins un segment de droite de manière à former un méplat sur toute la longueur de la fibre et
- réalisation dans ladite couche d'au moins un réseau de diffraction par effet photoréfractif.

L'attaque chimique est effectuée par un flux de gaz fluoré sous une torche plasma sur un tour verrier et est interrompue lorsque le méplat de la préforme fait face à ladite torche.

Le brevet britannique 2 189 900 de Luksun Li et al. décrit un procédé de réalisation d'une fibre optique dont la section transverse présente au moins un segment de droite. Cela est obtenu par la réalisation d'un méplat sur une préforme de fibre optique avant étirage de cette dernière. Le méplat, toutefois, est réalisé à l'intérieur de la préforme.

Un procédé de réalisation mettant en oeuvre l'effet photoréfractif est décrit dans le brevet américain précité.

La couche en matériau optique, par exemple en silice SiO₂, peut être avantageusement dopée au moins par un élément choisi dans le groupe constitué par l'oxyde de titane TiO₂, l'oxyde de germanium GeO₂, l'oxyde de zirconium ZrO₂, l'oxyde de hafnium HfO₂, l'oxyde de phosphore P₂O₅ et les terres rares.

Le dispositif transducteur réalisé selon le procédé conforme à l'invention est représenté à la figure 1. Le dispositif transducteur 1 comporte une fibre optique 2 dont la section transverse présente au moins un segment de droite 3 de manière à former un méplat 4 sur toute la longueur de la fibre optique. Le méplat de la fibre optique est surmonté d'une couche d'un matériau optique 5 dopée dont l'indice de réfraction varie périodiquement le long de la fibre optique pour former au moins un réseau de diffraction 6. Comme décrit précédemment, la couche en matériau optique peut être avantageusement dopée au moins par un élément choisi dans le groupe constitué par l'oxyde de titane TiO₂, l'oxyde de germanium GeO₂, l'oxyde de zirconium ZrO₂, l'oxyde de hafnium HfO₂, l'oxyde de phosphore P₂O₅ et les terres rares.

Selon un mode de réalisation autre, le méplat de la fibre optique est surmonté d'une couche optique en matériau photorésistif dont l'épaisseur varie périodiquement le long de la fibre optique pour former au moins un réseau de diffraction. La réalisation du ou des réseaux de diffraction fait appel, par exemple, à un procédé connu d'attaque chimique.

Le dispositif transducteur est utilisé dans un capteur optique pour la mesure d'une grandeur physique, telle par exemple la température ou la pression, ou d'une grandeur chimique, telle par exemple le contenu d'anticorps dans une solution.

Dans de tels capteurs et selon un premier mode de réalisation, l'effet recherché peut être un couplage entre modes guidés ou modes de polarisation selon que l'on utilise une fibre optique bimodale ou une fibre optique à maintien de polarisation. La grandeur physique ou chimique à mesurer est appliquée sur l'un des réseaux de la fibre optique et est donnée par le rapport entre les intensités des modes respectifs.

Dans un deuxième mode de réalisation du capteur optique, la variation de la grandeur physique ou chimique à mesurer modifie les caractéristiques spectrales de l'onde lumineuse se propageant dans la fibre optique. Une mesure spectrale par exemple en bout de fibre optique permet de déterminer la variation de la grandeur à mesurer.

Dans un troisième mode de réalisation du capteur optique, le ou les réseaux de diffraction sur la fibre optique sont utilisés pour injecter dans la fibre ou extraire de la fibre une onde lumineuse se propageant respectivement à l'extérieur et à l'intérieur de la fibre.

Dans le cas où une onde incidente externe est injectée dans la fibre à l'aide de l'un quelconque des réseaux de couplage, l'intensité lumineuse de l'onde optique injectée dans le coeur de la fibre est fonction de la variation de l'indice de réfraction d'un matériau transducteur disposé sur le réseau de couplage et donc de la variation de la grandeur à mesurer.

Dans le cas où une onde se propageant dans la fibre optique est extraite de celle-ci vers l'extérieur à l'aide de l'un quelconque des réseaux de couplage, l'angle que fait l'axe de propagation de l'onde optique extraite avec l'axe de la fibre est fonction de la variation de l'indice de réfraction d'un matériau transducteur disposé sur le réseau de couplage et donc de la variation de la grandeur à mesurer.

Le dispositif transducteur est encore utilisé dans un dispositif de télécommunication tel que décrit dans le document "Optical Fiber Delay-Line Signal Processing," IEEE Transductions or Microwave Theory and Techniques, Vol. MTT-33, No 3, March 1985, de Kenneth P. Jackson et al. Dans un tel dispositif de télécommunication une partie de l'onde guidée, de l'ordre de 1%, est extraite de la fibre par couplage entre un mode guidé dans la fibre et un mode radié vers l'extérieur. Ce dispositif est utilisé dans le domaine des télécommunications pour distribuer l'information à transmettre contenue dans l'onde optique guidée entre un nombre donné de récepteurs.

## Revendications

1. Procédé de réalisation d'un réseau de diffraction (6) sur une fibre optique (2), comportant les étapes suivantes:
- réalisation d'une fibre optique (2) dont la section transverse dans au moins une partie de la longueur de la fibre présente au moins un segment de droite de manière à former un méplat (4) sur ladite partie de la longueur, et dont ledit méplat ainsi formé est recouvert d'une couche optique dopée (5), et
- réalisation dans ladite couche optique dopée (5) recouvrant ledit méplat d'au moins un réseau de diffraction (6) par effet photoréfractif,
caractérisé en ce que ladite réalisation de ladite fibre optique (2) consiste à:
- réaliser, à partir d'une préforme initiale de fibre optique dont la partie extérieure est usinée ou polie selon un plan parallèle à l'axe de la préforme, une préforme dont la section transverse présente au moins un segment de droite, de manière à former un méplat sur toute la longueur de la préforme;
- déposer sur le méplat de la préforme ainsi réalisée une couche optique dopée; et
- étirer la préforme ainsi munie de ladite couche optique pour obtenir ladite fibre optique (2).

2. Procédé selon la revendication 1, caractérisé en ce que ledit dépôt de ladite couche optique dopée est effectué sur toute la surface de la préforme, et en ce qu'il est ensuite procédé à une attaque chimique de la couche optique ainsi déposée sur la partie circulaire de la préforme.

3. Procédé selon l'une quelconque des revendications 1 et 2, caractérisé en ce que ladite couche en matériau optique est dopée au moins par un élément choisi dans le groupe constitué par l'oxyde de titane TiO₂, l'oxyde de germanium GeO₂, l'oxyde de zirconium ZrO₂, l'oxyde de hafnium HfO₂, l'oxyde de phosphore P₂O₅ et les terres rares.

## Patentansprüche

1. Verfahren zum Herstellen eines Beugungsgitters (6) auf einer optischen Faser (2), umfassend die nachstehenden Schritte:
- Herstellen einer optischen Faser (2), deren Querschnitt auf mindestens einer Partie der Faserlänge mindestens ein gerades Segment aufweist, derart, daß eine Abflachung (4) auf der genannten Partie der Länge gebildet wird, und deren Abflachung, die auf diese Weise gebildet wurde, mit einer optischen dotierten Schicht (5) bedeckt ist, und
- Realisieren mindestens eines Beugungsgitters (6) durch photorefraktiven Effekt in der genannten optischen dotierten Schicht (5), welche die Abflachung bedeckt,
dadurch gekennzeichnet, daß die Herstellung der optischen Faser (2) umfaßt:
- Herstellen, ausgehend von einer Anfangsvorform der optischen Faser, deren äußere Partie bearbeitet oder poliert ist gemäß einer Ebene parallel zur Achse der Vorform, einer Vorform, deren Querschnitt mindestens ein gerades Segment aufweist, derart, daß eine Abflachung auf der gesamten Länge der Vorform gebildet wird;
- Aufbringen auf die Abflachung der so hergestellten Vorform einer optischen dotierten Schicht; und
- Strecken der auf diese Weise mit der optischen Schicht versehenen Vorform zum Erhalten der optischen Faser (2).

2. Verfahren nach Anspruch 1, dadurch gekennzeichnet, daß das Aufbringen der optischen dotierten Schicht auf der gesamten Oberfläche der Vorform erfolgt und daß danach zu einem chemischen Angriff auf die so aufgetragene optische Schicht auf der runden Partie der Vorform übergegangen wird.

3. Verfahren nach einem der Ansprüche 1 und 2, dadurch gekennzeichnet, daß die Schicht aus optischem Material mindestens mit einem Element dotiert wird, ausgewählt in der Gruppe, gebildet von Titanoxid TiO₂, Germaniumoxid GeO₂, Zirconiumoxid ZrO₂, Hafniumoxid HfO₂, Phosphoroxid P₂O₅ und seltene Erden.

## Claims

1. Method of manufacturing a diffraction grating (6) on an optical fibre (2) comprising the following stages:
- manufacture of an optical fibre (2), the cross-section of which, in at least a portion of the length of the fibre, has at least one rectilinear segment, so as to form a flat surface (4) on the said portion of the length, the flat surface of which being thus formed being covered by a doped optical layer (5), and
- manufacture, in the said doped optical layer (5) covering the said flat surface, of at least one diffraction grating by photoreactive action,
characterised in that the said manufacture of the said optical fibre (2) comprises:
- manufacturing, from an initial optic fibre preform, the external portion of which is machined or polished in accordance with a plane parallel to the axis of the preform, a preform the cross-section of which has at least one rectilinear segment, so as to form a flat surface over the entire length of the preform;
- depositing on the flat surface thus produced a doped optical layer; and
- drawing out the preform thus provided with the said optical layer, in order to obtain the said optical fibre (2).

2. Method according to claim 1, characterised in that the said deposition of the said doped optical layer is effected over the entire surface of the preform, and in that etching is then carried out of the optical layer thus deposited on the circular portion of the preform.

3. Method according to any one of claims 1 and 2, characterised in that the said layer of optical material is doped at least by an element selected from the group made up of titanium oxide TiO₂, germanium oxide GeO₂, zirconium oxide ZrO₂,hafnium oxide HfO₂, phosphoric oxide P₂O₅ and the rare earths.
